# EUROPEAN PATENT APPLICATION

(11) **EP 4 336 353 A1**
(43) Date of publication of application: **13.03.2024**
(21) Application number: 22810191.1
(22) Date of filing: 30.03.2022
(51) Int. Cl.: G06F 9/44

(54) **PAGE DISPLAY METHOD, ELECTRONIC DEVICE, AND STORAGE MEDIUM**

(30) Priority: 28.05.2021 CN 202110594190
(71) Applicant: Huawei Technologies Co., Ltd., Longgang Shenzhen, Guangdong 518129 (CN)
(72) Inventor: DAI, Yaya, Shenzhen, Guangdong 518129 (CN); ZHANG, Wenlong, Shenzhen, Guangdong 518129 (CN); BU, Defeng, Shenzhen, Guangdong 518129 (CN)
(74) Representative: Huawei European IPR
(86) International application number: PCT/CN2022/084169
(87) International publication number: WO 2022/247458

(57) **Abstract**

Embodiments of this application provide a page display method, an electronic device, and a storage medium, and relate to the field of communication technologies. The method includes: A rendering module loads a quick application page in response to an operation of opening a quick application by a user. The quick application page includes at least one web component. The rendering module sends association information of the web component to a window management module. The window management module creates a web page window at a location of the web component based on the association information of the web component, and loads a web page in the web page window. The web page overlays the web component. According to the method provided in embodiments of this application, a quick application page can be displayed on a PC, and efficiency of displaying the quick application page can be effectively improved.

## Description

This application claims priority to Chinese Patent Application No. 202110594190.4, filed with the China National Intellectual Property Administration on May 28, 2021 and entitled "PAGE DISPLAY METHOD, ELECTRONIC DEVICE, AND STORAGE MEDIUM", which is incorporated herein by reference in its entirety.

### TECHNICAL FIELD

Embodiments of this application relate to the field of communication technologies, and in particular, to a page display method, an electronic device, and a storage medium.

### BACKGROUND

A quick application is a new installation-free application form. A web component in a quick application specification may be used to load a hypertext markup language (Hypertext Markup Language, HTML) page of a specified uniform resource locator (Uniform Resource Locator, URL).

Currently, the web component is implemented only on an Android platform based on an Android native webview component. However, there is no corresponding implementation solution on a personal computer (Personal Computer, PC). Therefore, a page of the quick application cannot be browsed on the PC.

### SUMMARY

Embodiments of this application provide a page display method, an electronic device, and a storage medium, to provide a manner for displaying a page of a quick application on a PC. In this way, efficiency of browsing the quick application on the PC can be improved, and user experience can be improved.

According to a first aspect, an embodiment of this application provides a page display method. The page display method is applied to an electronic device. The electronic device includes a rendering module and a window management module. The method includes the following.

The rendering module loads a quick application page in response to an operation of opening a quick application by a user, where the quick application page includes at least one web component, and the electronic device may be a notebook computer or a desktop computer. The rendering module may be a component rendering engine or another module having a rendering function. A name of the rendering module in practical application is not specifically limited in embodiments of this application. The quick application may be an installation-free application or an applet. A specific form of the quick application is not specifically limited in embodiments of this application.

The rendering module sends association information of the web component to the window management module. Specifically, the association information of the web component may be used to generate a window carrying a web page.

The window management module creates a web page window at a location of the web component based on the association information of the web component, and loads a web page in the web page window, where the web page overlays the web component.

In this embodiment of this application, when the quick application page is loaded, the window management module is requested to load the web page. The loaded web page is presented on the quick application page. In this way, the quick application page on the PC can be quickly displayed, and display efficiency of the quick application page can be improved.

To effectively create the window carrying the web page, in a possible implementation, the association information includes preset size information, preset locating information, and a preset web page address.

To determine a layered relationship between the web page and the quick application page, in a possible implementation, the association information further includes page layered information. The page layered information represents the layered relationship between the quick application page and the web page.

To enable the web page to be quickly loaded, in a possible implementation, the preset web page address is preset in the quick application.

In a possible implementation, the method further includes:
sending update information of the web component to the window management module in response to a third event detected by the rendering module, where the third event may be a scrolling event of the quick application page.

The window management module updates the web page window based on the update information.

In this embodiment of this application, content carried in the web component may be updated and displayed by detecting the scrolling event of the quick application page. In this way, displayed content of the quick application page can be synchronized with that of the web page.

In a possible implementation, the web component is completely visible on the quick application page. The update information includes update locating information. The update locating information represents a location of the web component after the quick application page is scrolled. That the window management module updates the web page window based on the update information includes the following.

The window management module updates a location of the web page window based on the update locating information, and overlays the web component whose location is updated with the web page window whose location is updated.

In this embodiment of this application, after the quick application page is scrolled, the web component is completely visible on the quick application page. Therefore, the rendering module only needs to transmit the update locating information to the window management module. In other words, the window management module only needs to update the location of the web page window. In this way, information exchange can be reduced, and a calculation amount of the window management module can be reduced, thereby improving system efficiency.

In a possible implementation, the web component is partially visible on the quick application page. The update information includes update locating information and update size information. The update locating information represents a location of the web component after the quick application page is scrolled. The update size information represents a size of a visible part of the web component after the quick application page is scrolled. That the window management module updates the web page window based on the update information includes the following.

The window management module updates the web page window based on the update locating information and the update size information, and overlays the web component whose location is updated with the updated web page window.

In this embodiment of this application, after the quick application page is scrolled, the web component is partially visible on the quick application page. Therefore, the rendering module needs to transmit the update locating information and the update size information to the window management module. In other words, the window management module needs to update the web page window based on the update locating information and the update size information. In this way, the quick application page can be synchronized with the web page.

In a possible implementation, the web component is invisible on the quick application page. The update information is for notifying the window management module that the web component is invisible on the quick application page. That the window management module updates the web page window based on the update information includes the following.

The window management module deletes the web page window.

In this embodiment of this application, when the web component is invisible on the quick application page, the window management module may delete the web page window. In this way, a cache of the window management module can be cleared, thereby improving cache efficiency.

To effectively locate the web component, in a possible implementation, the preset locating information includes a distance between the web component and an upper frame or a lower frame of the quick application page and a distance between the web component and a left frame or a right frame of the quick application page.

In a possible implementation, the method further includes:
sending a notification message to the rendering module in response to a first event detected by the window management module, where the notification message is for notifying the rendering module that the web page fails to be loaded, and the first event may be a web page loading failure event.

The rendering module displays the notification message on the quick application page.

In this embodiment of this application, a user may be reminded, by the display of the web page loading failure event on the quick application page, that the web page fails to be loaded. In this way, waiting time of the user can be reduced, and user experience can be improved.

In a possible implementation, the method further includes:
sending web page loading progress to the rendering module in response to a second event detected by the window management module, where the second event may be an event for monitoring the web page loading progress.

The rendering module displays the loading progress on the quick application page.

In this embodiment of this application, the web page loading progress is displayed on the quick application page. In this way, the user can be notified of current web page loading progress, thereby improving user experience.

According to a second aspect, an embodiment of this application provides an apparatus. The apparatus includes:
a rendering module, configured to: load a quick application page in response to an operation of opening a quick application by a user, where the quick application page includes at least one web component, and send association information of the web component to a window management module; and
the window management module, configured to: create a web page window at a location of the web component based on the association information of the web component, and load a web page in the web page window, where the web page overlays the web component.

In a possible implementation, the association information includes preset size information, preset locating information, and a preset web page address.

In a possible implementation, the association information further includes page layered information, and the page layered information represents a layered relationship between the quick application page and the web page.

In a possible implementation, the preset web page address is preset in the quick application.

In a possible implementation, the rendering module is further configured to send update information of the web component to the window management module in response to a detected third event. The window management module is further configured to update the web page window based on the update information.

In a possible implementation, the web component is completely visible on the quick application page. The update information includes update locating information. The update locating information represents a location of the web component after the quick application page is scrolled. The window management module is further configured to: update a location of the web page window based on the update locating information, and overlay the web component whose location is updated with the web page window whose location is updated.

In a possible implementation, the web component is partially visible on the quick application page. The update information includes update locating information and update size information. The update locating information represents a location of the web component after the quick application page is scrolled. The update size information represents a size of a visible part of the web component after the quick application page is scrolled. The window management module is further configured to: update the web page window based on the update locating information and the update size information, and overlay the web component whose location is updated with the updated web page window.

In a possible implementation, the web component is invisible on the quick application page. The update information is for notifying the window management module that the web component is invisible on the quick application page. The window management module is further configured to delete the web page window.

In a possible implementation, the preset locating information includes a distance between the web component and an upper frame or a lower frame of the quick application page, and a distance between the web component and a left frame or a right frame of the quick application page.

In a possible implementation, the window management module is further configured to send a notification message to the rendering module in response to a detected first event, where the notification message is for notifying the rendering module that the web page fails to be loaded. The rendering module is further configured to display the notification message on the quick application page.

In a possible implementation, the window management module is further configured to send web page loading progress to the rendering module in response to a detected second event. The rendering module is further configured to display the loading progress on the quick application page.

According to a third aspect, an embodiment of this application provides an electronic device. The electronic device includes:
a memory, configured to store computer program code, where the computer program code includes instructions, where the electronic device further includes a rendering module and a window management module, and when the electronic device reads the instructions from the memory, the electronic device is enabled to perform the following steps.

The rendering module loads a quick application page in response to an operation of opening a quick application by a user, where the quick application page includes at least one web component.

The rendering module sends association information of the web component to the window management module.

The window management module creates a web page window at a location of the web component based on the association information of the web component, and loads a web page in the web page window, where the web page overlays the web component.

In a possible implementation, when the instructions are executed by the electronic device, the electronic device is enabled to further perform the following step:
sending update information of the web component to the window management module in response to a third event detected by the rendering module.

The window management module updates the web page window based on the update information.

In a possible implementation, the web component is completely visible on the quick application page. The update information includes update locating information. The update locating information represents a location of the web component after the quick application page is scrolled. That when the instructions are executed by the electronic device, the electronic device is enabled to perform the step of updating, by the window management module, the web page window based on the update information includes the following.

The window management module updates a location of the web page window based on the update locating information, and overlays the web component whose location is updated with the web page window whose location is updated.

In a possible implementation, the web component is partially visible on the quick application page. The update information includes update locating information and update size information. The update locating information represents a location of the web component after the quick application page is scrolled. The update size information represents a size of a visible part of the web component after the quick application page is scrolled. That when the instructions are executed by the electronic device, the electronic device is enabled to perform the step of updating, by the window management module, the web page window based on the update information includes the following.

The window management module updates the web page window based on the update locating information and the update size information, and overlays the web component whose location is updated with the updated web page window.

In a possible implementation, the web component is invisible on the quick application page. The update information is for notifying the window management module that the web component is invisible on the quick application page. That when the instructions are executed by the electronic device, the electronic device is enabled to perform the step of updating, by the window management module, the web page window based on the update information includes the following.

The window management module deletes the web page window.

According to a fourth aspect, an embodiment of this application provides a computer-readable storage medium. The computer-readable storage medium stores a computer program. When the computer program is run on a computer, the computer is enabled to perform the method according to the first aspect.

According to a fifth aspect, an embodiment of this application provides a computer program. When the computer program is executed by a computer, the computer program is for performing the method according to the first aspect.

In a possible design, all or some of the programs in the fifth aspect may be stored in a storage medium encapsulated with a processor. Alternatively, some or all of the programs may be stored in a memory that is not encapsulated with the processor.

### BRIEF DESCRIPTION OF DRAWINGS

FIG. 1 is a schematic diagram of an application scenario according to an embodiment of this application;
FIG. 2 is a schematic diagram of a system architecture of an electronic device according to an embodiment of this application;
FIG. 3 is a schematic diagram of a hardware structure of an electronic device according to an embodiment of this application;
FIG. 4 is a schematic flowchart of a page display method according to an embodiment of this application;
FIG. 5 is a schematic diagram of a page overlaying display effect according to an embodiment of this application; and
FIG. 6 is a schematic diagram of a structure of a page display apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

Currently, manners for displaying a quick application page on a PC include the following two types.

### Manner 1: Implementing based on an iframe

In the manner 1, a server resource usually specifies a domain name for requesting the resource. Therefore, if a website with another domain name loads the resource, an error is reported on the page. That is, the manner 1 cannot resolve a cross-domain problem.

### Manner 2: Implementing based on a webview component

In the manner 2, the webview component may be usually provided by an NW.js framework or an Electron framework. A webview tag is provided by the NW.js framework and the Electron framework based on the webview of Google chromium. However, the foregoing webview tag is not recommended in Google official documentation. Therefore, functions such as navigation and event routing may have problems, and long-term stability and availability cannot be ensured, thereby causing stability problems.

To resolve the foregoing problem, an embodiment of this application provides a page display method. The page display method is applied to an electronic device 100. The electronic device 100 may be a PC.

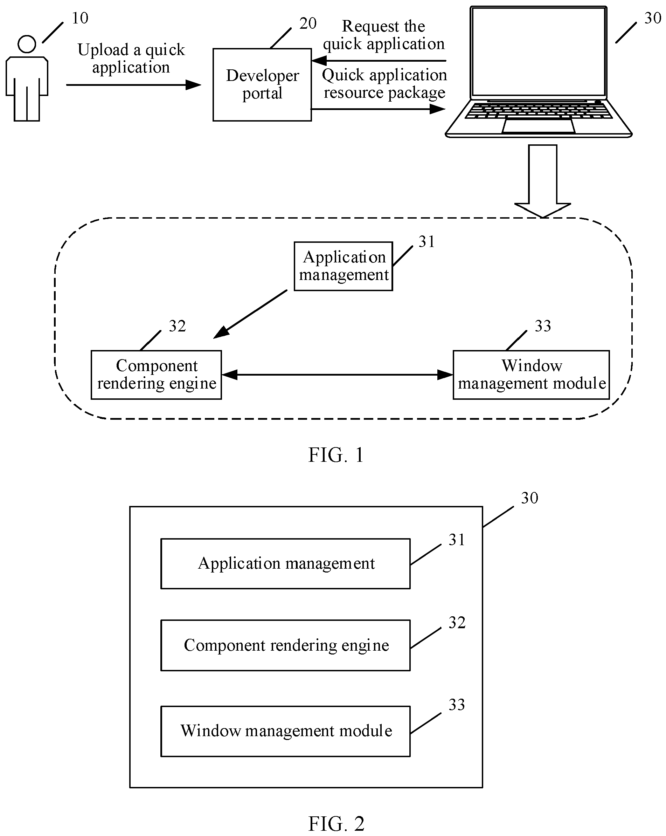

The following describes the foregoing page display method with reference to FIG. 1 to FIG. 4.

FIG. 1 is an architectural diagram of an application scenario according to an embodiment of this application. As shown in FIG. 1, a quick application developer 10 may be a developer developing a quick application. After any quick application is developed, the quick application developer 10 may upload the quick application to a developer portal 20. The developer portal 20 may be a website storing the quick application, and is configured to provide different quick applications for a user. Then, the user may request a quick application from the developer portal 20 by using a client (for example, an application management 31) installed on a terminal device 30 (for example, a PC). After receiving the quick application request of the terminal 30, the developer portal 20 may send a quick application resource package to the terminal device 30. After receiving the quick application resource package sent by the developer portal 20, the application management 31 in the terminal device 30 may decompress the quick application resource package, and may indicate a component rendering engine 32 in the terminal device 30 to parse page data and render a component. In this way, a quick application page can be generated. It may be understood that a form of the quick application may be a new installation-free application form, or may be a form of an applet. A presentation form of the quick application is not specially limited in this embodiment of this application.

It should be noted that, when developing a quick application, the developer may specify a domain name (for example, https://www.huawei.com) for a web component of the quick application page. Therefore, when rendering the component, the component rendering engine 32 may request a window management module 33 in the terminal device 30 to load and render the page with the specified domain name.

FIG. 2 shows a system architecture of the foregoing terminal device 30. The terminal device 30 may be the foregoing electronic device 100. The terminal device 30 may be, for example, a device such as a portable computer or a desktop computer. The terminal device 30 may run a corresponding operating system, such as Windows, Linux, or macOS.

As shown in FIG. 2, the terminal device 30 may include an application management 31, a component rendering engine 32, and a window management module 33. The application management 31 may be configured to perform downloading, signature verification, file decompression, and page file parsing on a quick application. It may be understood that the foregoing example only shows some functions of the application management 31. In some embodiments, the application management 31 may further include more functions. The component rendering engine 32 may be configured to load a quick application page, and may render a component on the quick application page. The component may include a common component (for example, a button component and a text component) and a web component. The web component may be configured to carry a page loaded by the window management module 33. The window management module 33 may be configured to load a web page corresponding to a specified domain name and can render the web page, and then may overlay a location corresponding to the web component on the quick application page with the rendered page.

In a specific implementation, the window management module 33 may use a browser view (Browser View) frame. The browser view frame is a window having a web page loading capability. However, this does not constitute a limitation on embodiments of this application. In some embodiments, the framework may be another framework having a web page loading capability.

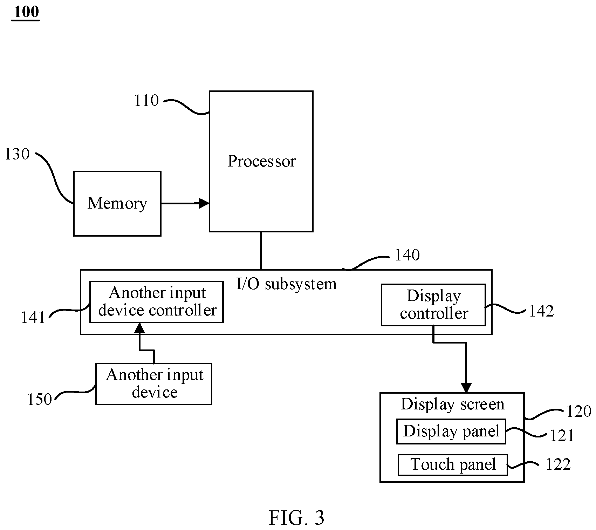

With reference to FIG. 3, the following first describes an example electronic device provided in the following embodiments of this application. FIG. 3 is a schematic diagram of a structure of an electronic device 100. As shown in FIG. 3, the electronic device 100 includes a processor 110, a display screen 120, a memory 130, an I/O subsystem 140, and an another input device 150.

The processor 110 is a control center of the electronic device 100, is connected to all parts of the entire electronic device 100 through various interfaces and wire lines, and performs various functions of the electronic device 100 and data processing by running or executing a software program and/or a module stored in the memory 130 and scheduling data stored in the memory 130, to perform overall monitoring on the electronic device 100. Optionally, the processor 110 may include one or more processing units. Preferably, the processor 110 may integrate an application processor and a modem processor. The application processor mainly processes an operating system, a user interface, an application, and the like. The modem processor mainly processes wireless communication. It can be understood that the modem processor may alternatively be not integrated into the processor 110.

The display screen 120 may be configured to display information input by a user or information provided for the user, and various menus of the electronic device 100, and may receive user input. Specifically, the display screen 120 may include a display panel 121 and a touch panel 122. The display panel 121 may be configured in a form of a liquid crystal display (LCD, Liquid Crystal Display), an organic light-emitting diode (OLED, Organic Light-Emitting Diode), or the like. The touch panel 122 is also referred to as a touchscreen, a touch-sensitive screen, or the like, and may collect a contact or non-contact operation of the user on or near the touch panel (for example, an operation of the user on or near the touch panel 122 by using any proper object or accessory such as a finger or a stylus, or a motion sensing operation may be included, where the operation includes a single-tap control operation, a multi-tap control operation, and the like), and drive a corresponding connection apparatus according to a preset program. Optionally, the touch panel 122 may include two parts: a touch detection apparatus and a touch controller. The touch detection apparatus detects a touch place and a gesture of a user, detects a signal of a touch operation, and transmits the signal to the touch controller. The touch controller receives touch information from the touch detection apparatus, converts the touch information into information that can be processed by a processor, and then transmits the information to the processor 110. In addition, the touch controller can receive and execute a command sent by the processor 110. Furthermore, the touch panel 122 may be implemented by using a plurality of types such as a resistive type, a capacitive type, an infrared type, and a surface acoustic wave type. Alternatively, the touch panel 122 may be implemented by using any technology developed in the future. Further, the touch panel 122 may overlay the display panel 121. The user may perform, based on content displayed on the display panel 121 (where the displayed content includes but is not limited to a soft keyboard, a virtual mouse, a virtual key, an icon, and the like), an operation on or near the touch panel 122 that overlays the display panel 121. After detecting the operation on or near the touch panel, the touch panel 122 transmits the operation to the processor 110 by using the I/O subsystem 140, to determine user input, and the processor 110 provides corresponding visual output on the display panel 121 by using the I/O subsystem 140 based on the user input. In FIG. 3, the touch panel 122 and the display panel 121 are used as two independent components to implement input and output functions of the electronic device 100. However, in some embodiments, the touch panel 122 and the display panel 121 may be integrated to implement the input and output functions of the electronic device 100.

The memory 130 may be configured to store a software program and a module. The processor 110 executes various functional applications of the electronic device 100 and data processing by running the software program and the module that are stored in the memory 130. The memory 130 may mainly include a program storage area and a data storage area. The program storage area may store an operating system, an application program required by at least one function, and the like. The data storage area may store data created based on the use of the electronic device 100, and the like. In addition, the memory 130 may include a high-speed random access memory, and may further include a non-volatile memory, such as at least one magnetic disk storage device, a flash memory, or another volatile solid-state storage device.

The I/O subsystem 140 is configured to control an external input/output device, and may include an another input device controller 141 and a display controller 142. Optionally, one or more other input control device controllers 141 receive a signal from the another input device 150 and/or send a signal to the another input device 150. The another input device 150 may include a physical button (a press button, a rocker button, or the like), a dial, a slide switch, a joystick, a click wheel, and an optical mouse (where the optical mouse is a touch-sensitive surface that does not display visual output, or an extension of a touch-sensitive surface formed by a touchscreen). It should be noted that the another input control device controller 141 may be connected to any one or more of the foregoing devices. The display controller 142 in the I/O subsystem 140 receives a signal from the display screen 120 and/or sends a signal to the display screen 120. After the display screen 120 detects the user input, the display controller 142 converts the detected user input into interaction with a user interface object displayed on the display screen 120, to implement humanmachine interaction.

The another input device 150 may be configured to receive input digit or character information, and may be configured to generate key signal input related to user setting and function control of the electronic device 100. Specifically, the another input device 150 may include but is not limited to one or more of a physical keyboard, a function key (such as a volume control key or an on/off key), a trackball, a mouse, a joystick, an optical mouse (where the optical mouse is a touch-sensitive surface that does not display visual output, or an extension of a touch-sensitive surface formed by a touchscreen), and the like. The another input device 150 is connected to another input device controller 141 of the I/O subsystem 140, and performs signal interaction with the processor 110 under the control of the another input device controller 141.

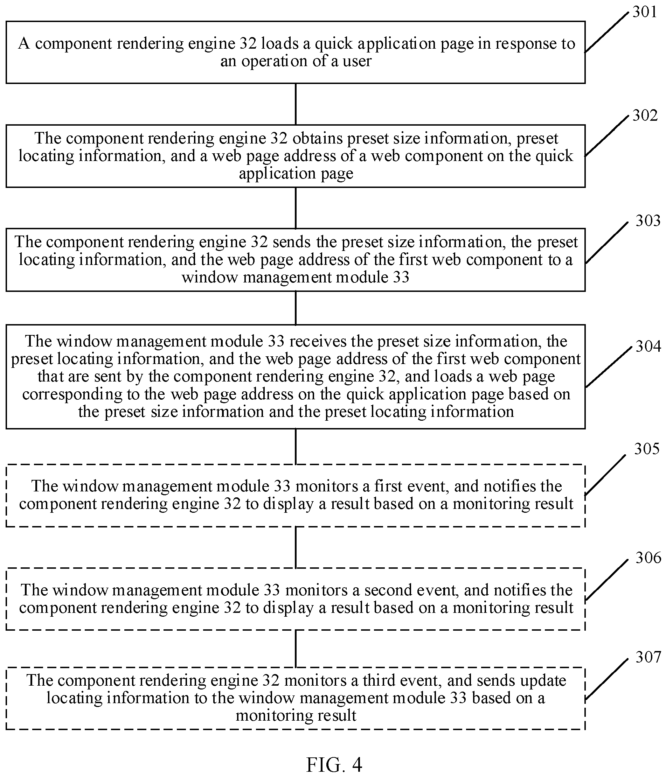

FIG. 4 is a schematic flowchart of a page display method according to an embodiment of an embodiment of this application. The method includes the following steps.

Step 401: A component rendering engine 32 loads a quick application page in response to an operation of a user.

Specifically, the component rendering engine 32 may be, for example, integrated into a quick application center, or may be independent of a quick application center. The quick application center may be an application installed in an electronic device 100. The user may perform an operation on the electronic device 100. For example, the user may select and click a quick application on a quick application center page presented on a display screen 120 of the electronic device 100 to download the quick application. The component rendering engine 32 may load the quick application page in response to the operation of the user. The quick application page may include at least one web component. Optionally, the quick application page may further include one or more common components. The common components may include a button component, a text component, and the like.

In a specific implementation, an application management 31 may download the quick application requested by the user in response to the operation of the user, and may decompress the quick application after the download of the quick application is completed. Then, the application management 31 may indicate the component rendering engine 32 to parse data of the quick application page. In this way, the quick application page can be loaded.

It may be understood that the click operation shows only an example of an operation of downloading the quick application and loading the quick application page. In some embodiments, the quick application may be downloaded and the quick application page may be loaded by another user operation.

Step 402: The component rendering engine 32 obtains preset size information, preset locating information, and a preset web page address of the web component on the quick application page.

Specifically, when loading the quick application page, the component rendering engine 32 may further obtain the preset size information, the preset locating information, and the preset web page address of the web component. The web component may be configured to carry a web page loaded and displayed by a window management module 33. The preset web page address may be a domain name (for example, https://www.huawei.com) preset in the quick application. For example, when developing the quick application, a developer may preset the web page address. In this way, when opening the quick application and loading the quick application page, a user may request the window management module 33 to load a web page corresponding to the preset web page address.

It may be understood that a quantity of the web components may be one or more, and each web component may include a corresponding preset web page address. Then, an example in which the quick application page includes one web component (for ease of description, where the web component is referred to as a "first web component" hereinafter) is used for description. For a scenario in which the quick application page includes a plurality of web components, refer to the manner of the first web component. Details are not described herein again.

The size information of the first web component may include a width and a height of the first web component. The locating information of the first web component may include a distance between the first web component and an upper frame of the quick application page, a distance between the first web component and a lower frame of the quick application page, a distance between the first web component and a left frame of the quick application page, and a distance between the first web component and a right frame of the quick application page.

It may be understood that the locating information of the first web component may further include less information. For example, the locating information of the first web component may include a distance between the first web component and an upper frame of the quick application page and a distance between the first web component and a left frame of the quick application page.

In a specific implementation, the distance between the first web component and the upper frame of the quick application page may be a distance between a center of the first web component and the upper frame of the quick application page. The distance between the first web component and the lower frame of the quick application page may be a distance between the center of the first web component and the lower frame of the quick application page. The distance between the first web component and the left frame of the quick application page may be a distance between the center of the first web component and the left frame of the quick application page. The distance between the first web component and the right frame of the quick application page may be a distance between the center of the first web component and the right frame of the quick application page.

Optionally, the distance between the first web component and the upper frame of the quick application page may alternatively be a distance between an upper frame of the first web component and the upper frame of the quick application page. The distance between the first web component and the lower frame of the quick application page may alternatively be a distance between a lower frame of the first web component and the lower frame of the quick application page. The distance between the first web component and the left frame of the quick application page may alternatively be a distance between a left frame of the first web component and the left frame of the quick application page. The distance between the first web component and the right frame of the quick application page may alternatively be a distance between a right frame of the first web component and the right frame of the quick application page.

It may be understood that the foregoing manner for determining the location of the first web component relative to the quick application page does not constitute a limitation on this embodiment of this application. In some embodiments, the locating information between the first web component and the quick application page may be alternatively determined in another manner for calculating a distance.

Step 403: The component rendering engine 32 sends the preset size information, the preset locating information, and the preset web page address of the first web component to the window management module 33.

Specifically, the window management module 33 may be, for example, integrated into the quick application center, or may be independent of the quick application center. To enable the window management module 33 to load a web page, the component rendering engine 32 may send the preset size information, the preset locating information, and the preset web page address of the first web component to the window management module 33. In this way, the window management module 33 may create a corresponding web page window based on the preset size information and the preset locating information, and may load web page data in the web page window.

Optionally, the component rendering engine 32 may further send page layered information to the window management module 33. The page layered information is for identifying a layered relationship between the web page and the quick application page. For example, the web page may be located at an upper layer of the quick application page. In this way, the web page may overlay the quick application page.

It may be understood that, when the component rendering engine 32 sends the preset size information, the preset locating information, the preset web page address, and the page layered information to the window management module 33, an optional manner is that the component rendering engine 32 may send the preset size information, the preset locating information, the preset web page address, and the page layered information to the application management 31 in the electronic device 100. In addition, the application management 31 may send the preset size information, the preset locating information, the preset web page address, and the page layered information to the window management module 33. The application management 31 may be, for example, integrated into the quick application center, or may be independent of the quick application center. In this embodiment of this application, a manner in which the component rendering engine 32 sends the preset size information, the preset locating information, the preset web page address, and the page layered information to the window management module 33 is not limited to a unique implementation.

Step 404: The window management module 33 receives the preset size information, the preset locating information, and the preset web page address of the first web component that are sent by the component rendering engine 32, and loads a web page corresponding to the preset web page address on the quick application page based on the preset size information and the preset locating information.

Specifically, after receiving the preset size information, the preset locating information, and the preset web page address of the first web component that are sent by the component rendering engine 32, the window management module 33 may create, at a location corresponding to the preset locating information, a web page window with a size same as the preset size information of the first web component.

Then, the window management module 33 may load and render the web page data in the created web page window based on the preset web page address. In this way, a web page can be obtained, and the web page can be overlaid at the location of the first web component on the quick application page based on the page layered information.

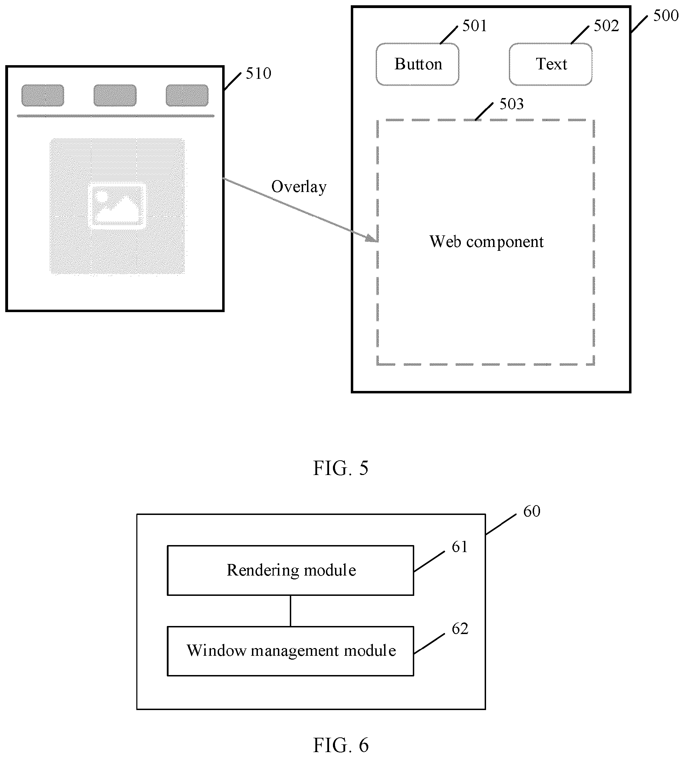

The loading of the web page is described with reference to FIG. 5. As shown in FIG. 5, the quick application page 500 includes a component 501, a component 502, and a component 503. The component 501 and the component 502 are common components. In other words, the component 501 and the component 502 may be directly rendered by the component rendering engine 32. The component 503 is a web component. In other words, the component 503 may not directly display any content. In this case, the window management module 33 may create a web page window at a location of the component 503, and load and render the web page data in the web page window to obtain a web page 510. The web page window and the component 503 may usually have a same size, and the web page window overlays the component 503. In this way, the component 503 may display the web page 510. In this way, when a user opens the quick application page in the electronic device 100, a problem that displaying cannot be performed across domains can be avoided, and display stability of the quick application page can be improved.

Optionally, the window management module 33 may alternatively create a corresponding web page window based on the preset size information, and load the web page data corresponding to the preset web page address in the web page window. Then, the window management module 33 may send the web page data to the component rendering engine 32, and the web page data is rendered by the component rendering engine 32 in the first web component. In this way, the web page can be displayed by the first web component.

Step 405: The window management module 33 monitors a first event, and notifies, based on a monitoring result, the component rendering engine 32 to display a result.

Optionally, in a process of loading the web page, the window management module 33 may further monitor the first event. The first event may be an error event. The error event may be a loading error caused by an error that occurs in a process of loading the web page by the window management module 33.

In a specific implementation, if the window management module 33 detects the foregoing first event, that is, when detecting a web page loading error, the window management module 33 may send a notification message. The notification message may be for notifying the component rendering engine 32 that the web page fails to be loaded. After receiving the notification message sent by the window management module 33, the component rendering engine 32 may display the notification message on the quick application page. In this way, a user can learn of a loading state of a current web page, thereby improving user experience.

Step 406: The window management module 33 monitors a second event, and notifies, based on a monitoring result, the component rendering engine 32 to display a result.

Optionally, in a process of loading the web page, the window management module 33 may further monitor the second event. The second event may be web page loading progress.

In a specific implementation, the window management module 33 may continuously monitor the second event. In other words, the window management module 33 may continuously monitor the web page loading progress, and may send currently monitored web page loading progress to the component rendering engine 32. After receiving the web page loading progress sent by the window management module 33, the component rendering engine 32 may display the web page loading progress on the quick application page. In this way, a user can learn of a current web page loading state, and user experience can be improved.

Step 407: The component rendering engine 32 monitors a third event, and sends update locating information to the window management module 33 based on a monitoring result.

Optionally, the third event may be a scrolling event of the quick application page. The third event may be triggered by a user. For example, the user may scroll the quick application page. In this way, the third event can be triggered. When the component rendering engine 32 detects the scrolling of the quick application page, that is, when the component rendering engine 32 detects the third event, the locating information of the first web component on the quick application page can be recalculated. In this case, the locating information obtained by recalculating may include the following three scenarios.

Scenario 1: The first web component is completely visible on the quick application page.

After the user scrolls the quick application page, if the first web component is completely visible on the quick application page, the component rendering engine 32 may recalculate current locating information of the first web component on the quick application page, to obtain the update locating information. In addition, the update locating information may be sent to the window management module 33. After receiving the foregoing update locating information, the window management module 33 may delete the original window, recreate a window, overlay the first web component whose location is updated with the recreated window based on the update locating information, and perform reloading and rendering in the recreated window to obtain a new web page. Preferably, after receiving the foregoing update locating information, the window management module 33 may alternatively not need to delete the original window. For example, the locating information of the original window may be reset. In this way, an updated window can be obtained, and the updated window can be overlaid based on the update locating information on the first web component whose location is updated. It may be understood that, because the first web component is completely visible on the quick application page, the size and display content of the first web component are not changed, and only the location is changed.

Scenario 2: The first web component is partially visible on the quick application page.

After the user scrolls the quick application page, if the first web component is partially visible on the quick application page, the component rendering engine 32 may calculate locating information and size information of a visible part of the first web component on the quick application page, to obtain the update locating information and update size information. In addition, the update locating information and the update size information may be sent to the window management module 33. After receiving the update locating information and the update size information, the window management module 33 may delete the original window, recreate a window based on the update size information, overlay the first web component whose location is updated with the recreated window based on the update locating information, and perform reloading and rendering in the recreated window to obtain a web page. Preferably, after receiving the update locating information and the update size information, the window management module 33 may alternatively not need to delete the original window. For example, the locating information and the size information of the original window may be reset. In this way, an updated window can be obtained, and the updated window can be overlaid based on the update locating information on the first web component whose location is updated. It may be understood that, because the first web component is partially visible on the quick application page, and the location, the size, and the display content of the first web component are changed, the window management module 33 may overlay the first web component whose location is updated with the window whose size is updated.

Scenario 3: The first web component is invisible on the quick application page.

After the user scrolls the quick application page, if the first web component is invisible on the quick application page, the component rendering engine 32 may send a notification message to the window management module 33. The notification message may be for notifying the window management module 33 that the first web component is invisible on the quick application page. After receiving the notification message, the window management module 33 may delete the original window. In this case, because the first web component is invisible on the quick application page, the window management module 33 does not need to recreate a web page window.

It may be understood that, in the foregoing embodiment, step 401 to step 407 are all optional steps. In another possible embodiment, more or fewer steps may be included than step 401 to step 407, and an execution sequence of the steps may be adjusted in a feasible case. This is not limited in this application.

FIG. 6 is a schematic diagram of a structure of a page display apparatus according to an embodiment of this application. As shown in FIG. 6, the page display apparatus 60 may include a rendering module 61 and a window management module 62.

The rendering module 61 is configured to load a quick application page in response to an operation of opening a quick application by a user. The quick application page includes at least one web component. The rendering module 61 is further configured to send association information of the web component to the window management module 62.

The window management module 62 is configured to: create a web page window at a location of the web component based on the association information of the web component, and load a web page in the web page window, where the web page overlays the web component.

In a possible implementation, the association information includes preset size information, preset locating information, and a preset web page address.

In a possible implementation, the association information further includes page layered information, and the page layered information represents a layered relationship between the quick application page and the web page.

In a possible implementation, the preset web page address is preset in the quick application.

In a possible implementation, the rendering module 61 is further configured to send update information of the web component to the window management module 62 in response to a detected third event. The window management module 62 is further configured to update the web page window based on the update information.

In a possible implementation, the web component is completely visible on the quick application page. The update information includes update locating information. The update locating information represents a location of the web component after the quick application page is scrolled. The window management module 62 is further configured to: update a location of the web page window based on the update locating information, and overlay the web component whose location is updated with the web page window whose location is updated.

In a possible implementation, the web component is partially visible on the quick application page. The update information includes update locating information and update size information. The update locating information represents a location of the web component after the quick application page is scrolled. The update size information represents a size of a visible part of the web component after the quick application page is scrolled. The window management module 62 is further configured to: update the web page window based on the update locating information and the update size information, and overlay the web component whose location is updated with the updated web page window.

In a possible implementation, the web component is invisible on the quick application page. The update information is for notifying the window management module 62 that the web component is invisible on the quick application page. The window management module 62 is further configured to delete the web page window.

In a possible implementation, the preset locating information includes a distance between the web component and an upper frame or a lower frame of the quick application page, and a distance between the web component and a left frame or a right frame of the quick application page.

In a possible implementation, the window management module 62 is further configured to send a notification message to the rendering module 61 in response to a detected first event. The notification message is for notifying the rendering module 61 that the web page fails to be loaded. The rendering module 61 is further configured to display the notification message on the quick application page.

In a possible implementation, the window management module 62 is further configured to send web page loading progress to the rendering module 61 in response to a detected second event. The rendering module 61 is further configured to display the loading progress on the quick application page.

The page display apparatus 60 provided in the embodiment shown in FIG. 6 may be configured to execute the technical solutions in the method embodiments shown in FIG. 1 to FIG. 5 in this application. For an implementation principle and technical effects of the page display apparatus 60, further refer to related descriptions in the method embodiments.

It should be understood that division of the modules of the page display apparatus shown in FIG. 6 is merely logical function division. In practical implementation, all or some of the modules may be integrated into one physical entity, or may be separated in physical. In addition, all of the modules may be implemented in a form of software invoked by a processing element or may be implemented in a form of hardware. Alternatively, some modules may be implemented in a form of software invoked by a processing element, and some modules are implemented in a form of hardware. For example, a detection module may be a separately disposed processing element, or may be integrated into a chip of an electronic device for implementation. Implementations of other modules are similar to the implementation of the detection module. In addition, all or some of the modules may be integrated together, or may be implemented independently. In an implementation process, steps in the foregoing methods or the foregoing modules may be implemented by using a hardware integrated logical circuit in a processing element, or by using instructions in a form of software.

For example, the foregoing modules may be configured as one or more integrated circuits for implementing the foregoing method, for example, one or more application-specific integrated circuits (Application Specific Integrated Circuit, ASIC for short), one or more digital signal processors (Digital Signal Processor, DSP for short), one or more field programmable gate arrays (Field Programmable Gate Array, FPGA for short), or the like. For another example, the modules may be integrated together, and implemented in a form of a system-on-a-chip (System-On-a-Chip, SOC for short).

It may be understood that an interface connection relationship between modules shown in this embodiment of this application is merely an example for description, and does not constitute a limitation on the structure of the electronic device 100. In some other embodiments of this application, the electronic device 100 may alternatively use an interface connection manner different from that in the foregoing embodiments, or use a combination of a plurality of interface connection manners.

It can be understood that, to implement the foregoing functions, the electronic device and the like each include corresponding hardware structures and/or software modules for executing the foregoing functions. A person skilled in the art should be easily aware that, in combination with units, and algorithm steps of each example described in embodiments disclosed in this application, embodiments of this application may be implemented in the form of hardware or a combination of hardware and computer software. Whether a function is performed by hardware or hardware driven by computer software depends on particular applications and design constraints of the technical solutions. A person skilled in the art can use different methods to implement the described functions for each particular application, but it should not be considered that the implementation goes beyond the scope of embodiments of this application.

In embodiments of this application, function modules of the foregoing electronic device may be divided according to the foregoing methods and examples. For example, the function modules may be divided for corresponding functions, or two or more functions may be integrated into one processing module. The integrated module may be implemented in a form of hardware, or may be implemented in a form of a software function module. It should be noted that, in embodiments of this application, module division is an example, and is merely a logical function division. In practical implementation, another division manner may be used.

The foregoing descriptions about implementations allow a person skilled in the art to understand that, for the purpose of convenient and brief description, division of the foregoing function modules is taken as an example for description. In practical application, the foregoing functions can be allocated to different modules and implemented according to a requirement. In other words, an inner structure of an apparatus may be divided into different function modules to implement all or some of the functions described above. For a detailed working process of the foregoing system, apparatus, and units, refer to a corresponding process in the foregoing method embodiments, and details are not described herein again.

Functional units in embodiments of this application may be integrated into one processing unit. Alternatively, each of the units may exist separately in physical. Alternatively, two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to execute all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A page display method, applied to an electronic device, wherein the electronic device comprises a rendering module and a window management module, and the method comprises:
loading, by the rendering module, a quick application page in response to an operation of opening a quick application by a user, wherein the quick application page comprises at least one web component;
sending, by the rendering module, association information of the web component to the window management module; and
creating, by the window management module, a web page window at a location of the web component based on the association information of the web component, and loading a web page in the web page window, wherein the web page overlays the web component.

2. The method according to claim 1, wherein the association information comprises preset size information, preset locating information, and a preset web page address.

3. The method according to claim 2, wherein the association information further comprises page layered information, and the page layered information represents a layered relationship between the quick application page and the web page.

4. The method according to claim 2, wherein the preset web page address is preset in the quick application.

5. The method according to any one of claims 1 to 4, wherein the method further comprises:
sending update information of the web component to the window management module in response to a third event detected by the rendering module; and
updating, by the window management module, the web page window based on the update information.

6. The method according to claim 5, wherein the web component is completely visible on the quick application page, the update information comprises update locating information, the update locating information represents a location of the web component after the quick application page is scrolled, and the updating, by the window management module, the web page window based on the update information comprises:
updating, by the window management module, a location of the web page window based on the update locating information, and overlaying the web component whose location is updated with the web page window whose location is updated.

7. The method according to claim 5, wherein the web component is partially visible on the quick application page, the update information comprises update locating information and update size information, the update locating information represents a location of the web component after the quick application page is scrolled, the update size information represents a size of a visible part of the web component after the quick application page is scrolled, and the updating, by the window management module, the web page window based on the update information comprises:
updating, by the window management module, the web page window based on the update locating information and the update size information, and overlaying the web component whose location is updated with the updated web page window.

8. The method according to claim 5, wherein the web component is invisible on the quick application page, the update information is for notifying the window management module that the web component is invisible on the quick application page, and the updating, by the window management module, the web page window based on the update information comprises:
deleting, by the window management module, the web page window.

9. The method according to claim 2, wherein the preset locating information comprises a distance between the web component and an upper frame or a lower frame of the quick application page and a distance between the web component and a left frame or a right frame of the quick application page.

10. The method according to any one of claims 1 to 9, wherein the method further comprises:
sending a notification message to the rendering module in response to a first event detected by the window management module, wherein the notification message is for notifying the rendering module that the web page fails to be loaded; and
displaying, by the rendering module, the notification message on the quick application page.

11. The method according to any one of claims 1 to 10, wherein the method further comprises:
sending web page loading progress to the rendering module in response to a second event detected by the window management module; and
displaying, by the rendering module, the loading progress on the quick application page.

12. An electronic device, comprising a memory, wherein the memory is configured to store computer program code, the computer program code comprises instructions, the electronic device further comprises a rendering module and a window management module, and when the electronic device reads the instructions from the memory, the electronic device is enabled to perform the following steps:
loading, by the rendering module, a quick application page in response to an operation of opening a quick application by a user, wherein the quick application page comprises at least one web component;
sending, by the rendering module, association information of the web component to the window management module; and
creating, by the window management module, a web page window at a location of the web component based on the association information of the web component, and loading a web page in the web page window, wherein the web page overlays the web component.

13. The electronic device according to claim 12, wherein when the instructions are executed by the electronic device, the electronic device is enabled to further perform the following steps:
sending update information of the web component to the window management module in response to a third event detected by the rendering module; and
updating, by the window management module, the web page window based on the update information.

14. The first device according to claim 13, wherein the web component is completely visible on the quick application page, the update information comprises update locating information, the update locating information represents a location of the web component after the quick application page is scrolled, and that when the instructions are executed by the electronic device, the electronic device is enabled to perform the step of updating, by the window management module, the web page window based on the update information comprises:
updating, by the window management module, a location of the web page window based on the update locating information, and overlaying the web component whose location is updated with the web page window whose location is updated.

15. The first device according to claim 13, wherein the web component is partially visible on the quick application page, the update information comprises update locating information and update size information, the update locating information represents a location of the web component after the quick application page is scrolled, the update size information represents a size of a visible part of the web component after the quick application page is scrolled, and that when the instructions are executed by the electronic device, the electronic device is enabled to perform the step of updating, by the window management module, the web page window based on the update information comprises:
updating, by the window management module, the web page window based on the update locating information and the update size information, and overlaying the web component whose location is updated with the updated web page window.

16. The first device according to claim 13, wherein the web component is invisible on the quick application page, the update information is for notifying the window management module that the web component is invisible on the quick application page, and that when the instructions are executed by the electronic device, the electronic device is enabled to perform the step of updating, by the window management module, the web page window based on the update information comprises:
deleting, by the window management module, the web page window.

17. The first device according to claim 12, wherein when the instructions are executed by the electronic device, the electronic device is enabled to further perform the following steps:
sending a notification message to the rendering module in response to a first event detected by the window management module, wherein the notification message is for notifying the rendering module that the web page fails to be loaded; and
displaying, by the rendering module, the notification message on the quick application page.

18. The first device according to claim 12, wherein when the instructions are executed by the electronic device, the electronic device is enabled to further perform the following steps:
sending web page loading progress to the rendering module in response to a second event detected by the window management module; and
displaying, by the rendering module, the loading progress on the quick application page.

19. A computer-readable storage medium, comprising computer instructions, wherein when the computer instructions are run on an electronic device, the electronic device is enabled to perform the method according to any one of claims 1 to 11.

20. A computer program product, wherein when the computer program product runs on a computer, the computer is enabled to perform the method according to any one of claims 1 to 11.
